# EUROPEAN PATENT APPLICATION

(11) **EP 3 531 655 A1**
(43) Date of publication of application: **28.08.2019**
(21) Application number: 18305199.4
(22) Date of filing: 26.02.2018
(51) Int. Cl.: H04L 29/06, H04W 12/06, G06F 21/44, H04L 29/08, H04W 12/08

(54) **METHOD AND APPARATUS FOR DETECTING A DEVICE IMPERSONATION IN A NETWORK**

(71) Applicant: THOMSON Licensing, 92130 Issy-les-Moulineaux (FR)
(72) Inventor: Aravamudan, Srivathsan, 600073 Chennai (IN); Ramalingam, Subhalakshmi, 600040 Chennai (IN); Gurusamy Thiagaraj, Jeganath, 632316 Arni (IN); Thamaram Rajan, Anjanamoorthi, 600116 Chennai (IN)
(74) Representative: Amor, Rim

(57) **Abstract**

This method for detecting a device impersonation in a network comprises:
- building (42) a first identity (ID1) of the device at the first connection of the device to the network;
- each time that the device connects to the network after the first connection, building (42) a second identity (ID2) of the device;
- correlating (46) the second identity (ID2) with the first identity (ID1),
- if there is no correlation between the first identity (ID1) and the second identity (ID2), de-authorizing (48) the device from the network,
wherein building (42) the first and second identities (ID1, ID2) comprises determining a profile of the device collected from a plurality of sources.

## Description

### TECHNICAL FIELD

The present disclosure generally relates to the field of networks, such as home networks comprising a plurality of devices connected to a home gateway.

More particularly, the disclosure deals with device impersonation in such network.

Thus, the disclosure concerns a method for detecting a device impersonation and a corresponding detection apparatus. It further concerns a computer program and a storage medium implementing the detection method of the disclosure.

### BACKGROUND OF THE DISCLOSURE

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Generally, in a home network, any network device is assigned a Media Access Control, MAC, address which is a unique identifier, containing 12 characters for example, for a specific piece of hardware, called the Network Interface Controller (NIC), of the device connecting said device to the network. The NIC is also known as a network interface card, a network adapter, a LAN (Local Area Network) adapter or a physical network interface.

Data packets that are sent through the network are always coming from or sent to a MAC address. A device of the network processes the packets if and only if the MAC address of the packet matches its own MAC address.

MAC address filtering, or MAC filtering, is a method that allows to define a list of devices in the home network, more particularly in a wireless network such as a WiFi network.

As MAC addresses are uniquely assigned to each device of the network, using MAC filtering on a network permits and denies network access to specific devices through the use of blacklists and whitelists. Thus, an authorized person will need to have a whitelist entry for each device that he or she would use to access the network.

Unfortunately, using MAC filtering may lead to a false sense of security. Indeed, while giving a wireless network some additional protection, MAC filtering can be circumvented by scanning a valid MAC address and then spoofing one's own MAC address into a validated one. This spoofing may be done in order to, for example, avoid access control lists on servers or routers thereby hiding a device in the network, or to access portions of the network that would be otherwise inaccessible, or to allow a device to impersonate another network device.

Thus, MAC filtering is not an effective control in wireless networks, as attackers can eavesdrop on wireless transmissions.

The document US 9,313,221 describes a method for determining a spoofing of a unique machine identifier, such as a MAC address, of an end user device of a network. This method uses the fact that, generally, the user of an end user device has certain network access habits, for example, accessing the same website during the same day or a particular time of day, logging onto the network at a particular time at a particular location, accessing the same services upon logging into the network, etc. Thus, the determination of a spoofing event is performed based on a statistical analysis of information that may be, for example, extracted from requests from an end user device. The extracted information may be compared with extracted historical information of the end user device. Then, it is determined if the end user device has been spoofed based on the comparison of the newly, or current, extracted information with the historical information.

The main disadvantage of this method is that it needs to process a big number of statistics and thus implies a high level of computation and power consumption, which is generally not available in the gateways of home networks.

### SUMMARY OF THE DISCLOSURE

The present disclosure proposes a solution for improving the situation.

Accordingly, the present disclosure provides a method for detecting a device impersonation in a network, the method comprising:
- building a first identity of the device at the first connection of the device to the network;
- each time that the device connects to the network after the first connection, building a second identity of the device;
- correlating the second identity with the first identity,
- if there is no correlation between the first identity and the second identity, de-authorizing the device from the network,
wherein building the first and second identities comprises determining a profile of the device collected from a plurality of sources.

The method of the present disclosure is advantageous as it does not perform a statistical analysis and a collection of data on individual devices. Thus, it needs less computing than the prior art solutions, which saves power and allows it to be easily implementable in a home network apparatus, like a home gateway.

Advantageously, the profile of the device comprises hardware and/or software characteristics related to the device.

The hardware characteristics may include:
- The type of device, such as TV, mobile phone, laptop, etc.
- The physical hardware components of the device, such as features related to antennas of the device.

The software features may include:
- The operating system, OS, of the device.
- The browsers versions.
- The applications signatures.

Thus, the present disclosure uses an extraction and correlation of hardware/software characteristics continuously when the device is connected to the network.

Advantageously, the method comprises, when there is no correlation between the first identity and the second identity, sending an alert notification to a user of the device.

According to an embodiment, the method comprises storing the first identity of the device in a non-volatile storage module.

Thus, the first identity is retained across reboots.

Advantageously, the method comprises updating the first identity only when there is a correlation between the first and second identities of the device.

Preferably, the first and second identities are represented in a form of Data, Information, Knowledge and Wisdom, DIKW, pyramid.

Advantageously, the network is a home network and the method is implemented by a gateway of the home network.

The disclosure also provides an apparatus for detecting a device impersonation in a home network, the apparatus comprising at least one processor configured to:
- build a first identity of the device at the first connection of the device to the network;
- each time that the device connects to the network after the first connection, build a second identity of the device;
- correlate the second identity with the first identity,
- if there is no correlation between the first identity and the second identity, de-authorize the device from the network,
wherein the first and second identities building comprises determining a profile of the device collected from a plurality of sources.

Advantageously, the apparatus comprises an alert module configured, when there is no correlation between the first identity and the second identity, to provide an alert notification to a user of the device.

According to an embodiment, the apparatus comprises a non-volatile storage module configured to store the first identity of the device.

Advantageously, the apparatus is a gateway.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may include a storage medium such as a floppy disk, a CD-ROM, a hard disk drive, a magnetic tape device or a solid state memory device, a flash or optical memory, a cloud based storage and the like.

The disclosure thus provides a computer-readable program including computer-executable instructions to enable a computer to perform the detection method of the present disclosure.

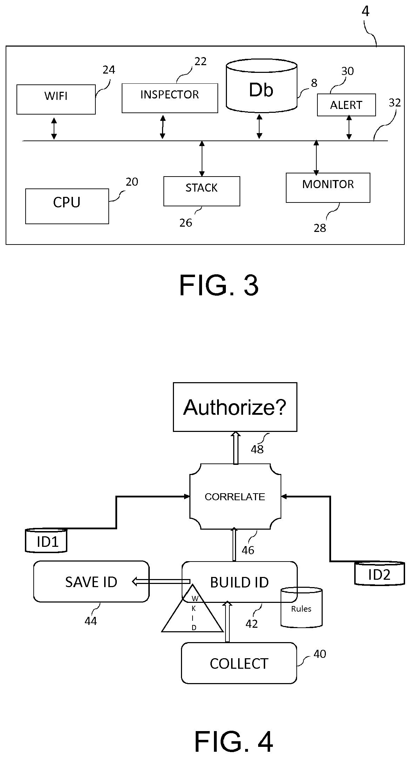

The diagram of figure 4 illustrates an example of the general algorithm for such computer program.

The disclosure also provides a non-transitory computer-readable storage medium implementing computer-executable instructions to enable a computer to perform the detection method of the present disclosure.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a home network in which the present disclosure may be advantageously implemented;
- Figure 2 is a schematic view showing an example of representation of data according to an embodiment of the present disclosure;
- Figure 3 is a schematic view illustrating an apparatus for detecting a device impersonation in a home network, according to an embodiment of the present disclosure; and
- Figure 4 is a flowchart showing the steps of the method for detecting a device impersonation according to an embodiment of the present disclosure.

### DETAILED DESCRIPTION OF PREFERRED EMBODIMENTS

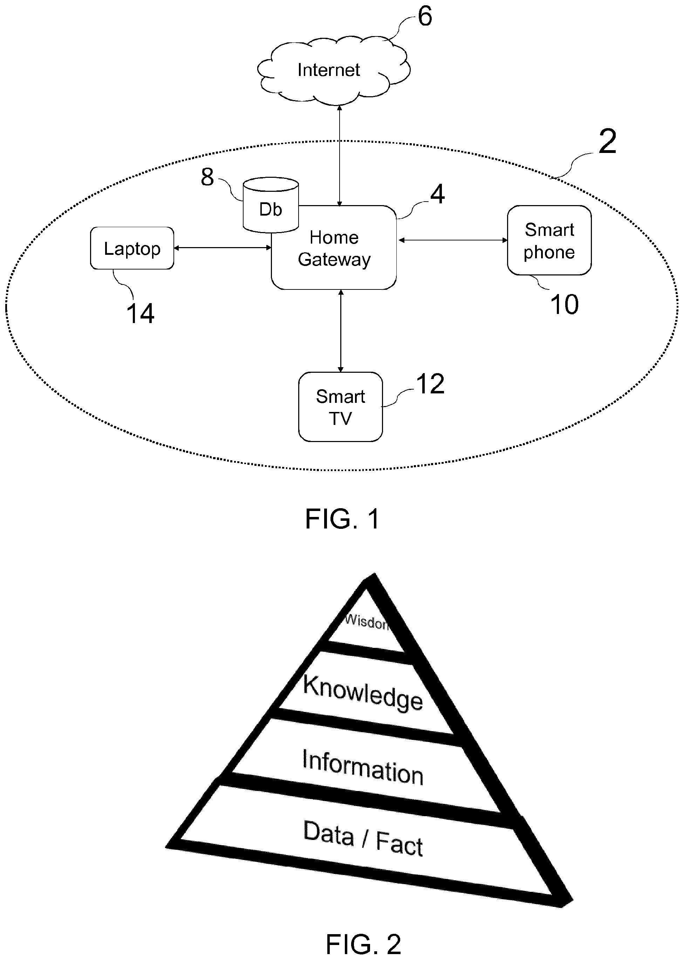

Figure 1 shows a home network 2 in which the method of the present disclosure is advantageously implemented.

The home network 2 comprises a home gateway 4 connected to the Internet network 6.

The home gateway 4 is connected to a storage module 8, in the form of non-volatile storage memory, configured to store different information related to the network 2. The storage module 8 may be included in the home gateway 4.

Several devices, such as a smartphone 10, a smart TV 12 and a laptop 14 are connected to the home gateway 4 typically through Wi-Fi. Thus, each device 10, 12, 14 can access the Internet 6 and the other devices of the home network 2 via the home gateway 4.

The home gateway 4 can collect data about the devices 10, 12, 14 and store the collected data in the storage module 8.

For instance, when a device 10, 12, 14 connects to the home gateway 4 for the first time, it transmits its MAC address, its host name and its published Wi-Fi radio parameters. Then, the home gateway 4 can build a first identity of the device 10, 12, 14 from the received data.

The received data and/or the first identity are stored persistently in the storage module 8. Thus, they remain available even after a reboot of the home gateway 4.

Then, at each further connection of the device 10, 12, 14, the home gateway 4 collects new information related to the device and uses the collected information to build a second identity of the device 10, 12, 14.

The first and the second identities are advantageously represented in the form of a DIKW (Data, Information, Knowledge and Wisdom) pyramid hierarchy, as illustrated on Figure 2.

As it appears on Figure 2, the DIKW pyramid has 4 levels:
- Data: these are data or facts that are collected. These row data could be easily faked by an impersonator device.
- Information: information are inferred, aggregated or computed from the data. The information may consist in responses to questions like: who, what, where, how many, when, etc. For instance, these questions may include:
   - How many radios does the client have?
   - What is the OS (Operating System) Architecture?
   - What are the applications installed?
   - What type of device is it?
- Knowledge: this is the second derivation or correlation of facts and information. It comprises a set of rules or premises that cannot be violated.

The Knowledge may be obtained through propositions, such as, for instance:
- If the device is an Android device, then it shall access the Android applications store.
- If the device is an Apple device, then it shall access iTunes and the Apple applications store.

The Knowledge may also be obtained through procedures, such as, for instance:
- If the OS is Windows, an http request only has CR (Carriage Return) and not CRLF (Carriage Return Line Feed).
- MIMO (Multiple Input Multiple Output) Wi-Fi devices have higher throughput.

The Knowledge may also be obtained through rules, such as, for instance:
- It is very common to update applications and very unlikely to downgrade them.
- Wisdom: when the set of Data, Information and Knowledge has conflicts, a decision will be triggered which determines the state of the device.

Table 1 below shows examples for data types, with associated Information, Knowledge and Wisdom.

**Table 1**

| Data Type | Data | Information | Knowledge | Wisdom |
|---|---|---|---|---|
| WiFi parameters | 1. MAC address | 1. MAX PHY rate | 1. Given the capabilities, the PHY rate cannot exceed the theoretical MAX. | If the premise is false, there is a conflict. |
| | 2. Current PHY rate | 2. MAX capabilities | | |
| | 3. Current capabilities | 3. Trained PHY rate | 2. Data collected like MIMO, antenna, support for Wifi standards such as 802.11 v,802.11 k and Wifi Short Guard Interval (SGI) cannot be different. | |
| | 4. RSSI | 4. NEGative capabilities | | |
| | 5. MIMO | | | |
| | 6. Current channel width | 5. MAX channel width | | |
| | 7. IEEE 802.11v support | | | |
| | 8. IEEE 802.11 k support | | | |
| | 9. Wifi SGI support | | | |
| Network | 1. Host name | 1. Inferred host and services | 1. Over time, the inferred data shall correlate to reference data. | |
| | 2. Bonjour services | 2. Inferred applications (DNS queries) | | |
| | 3. Portmap | | | |
| Browsers | 1. Client's OS | 1. Device type (laptop, mobile, IOT devices) | | |
| | 2. OS Version | | | |
| | 3. CPU architecture | | | |
| | 4. Browsers used | | | |
| | | 2. Inferred DOS or UNIX format | | |

In Table 1, a negative capability is when a device does not support a specific feature like IEEE 802.11v or IEEE 802.11k, for example. It is inferred from the device response to the gateway.

Figure 3 is a block diagram of an exemplary embodiment of an apparatus for detecting a device impersonation in the home network 2.

In the considered embodiment, this device is the home gateway 4.

Advantageously, the home gateway 4 includes, further to the storage module 8, one or more processors 20.

The home gateway 4 includes a packet inspector 22 that collects facts from various sources like HTTP requests, DNS queries, connection track entries etc... As already explained above with reference to Figure 2, the data collected are basic facts forming the base of the DIKW pyramid.

Examples of sources of information include:
1. Wifi antenna(s) data
   a. MIMO;
   b. Channel width;
   c. Radio types: 2.4 only, 5G only and both;
   d. RSSI, min-max, standard deviation ;
   e. Device roaming based on RSSI deviation.
2. Max WIFI throughput(s).
3. Browser agent(s).
4. Non-controversial OS, Arch, Browser version.
5. Application Signatures.
6. Top accessed hosts.
7. Mis-behavior
   a. Excessive ping / ARP / arping;
   b. Port Scanning.
8. Accessing pattern
   a. Internet only device;
   b. Local access.

The home gateway 4 also includes a Wi-Fi agent 24 which is responsible for collecting data / facts from the Wi-Fi stations such as PHY rate, RSSI, MIMO etc...

The home gateway 4 also includes a routing stack 26, for example OpenWRT (https:/openwrt.org/).

The home gateway 4 further includes an impersonation monitor 28 that decides whether a client device connected to the home network 2 is a real device or the impersonation of a real device.

The home gateway 4 also includes an alert module 30 configured to send an alert to the user. Alerts include any user notification like a buzzer, a LED blink. Push notifications for enrolled devices , emails, SMS, voice notifications may also be used by the alert module 30.

According to the represented embodiment, a bus 32 provides a communication path between various elements of the home gateway 4. Other point-to-point interconnection options (e.g. non-bus architecture) are also feasible.

Figure 4 is a flowchart showing the steps of the method for detecting a device impersonation according to an embodiment of the present disclosure.

The following steps take place each time that a device connects to the home gateway 4.

At step 40, the packet inspector 22 and the Wi-Fi agent 24 collect different data and facts related to the device from different sources, such as the data indicated in the column "data" of Table 1.

At step 42, the impersonation monitor 28 builds an identity of the device.

The identity includes basic facts along with derived information and knowledge, such as in the examples indicated in Table 1.

For the newly connected client, i.e. the device connects for the first time to the home network 2, the created identity ID1 is based on collected facts and the information. This first identity constitutes the reference or model identity.

During run time, i.e. it is not the first connection of the device to the home network 2, the first identity ID1 already exists and a second identity ID2 is built.

At step 44, the impersonation monitor 28, which has access to the non-volatile storage module 8, saves the built identity, i.e. the first identity if it is the first connection of the device.

The second identity, which is a runtime identity is preferably not stored in the non-volatile storage module 8 but it is saved in a volatile storage memory, for instance a RAM, of the gateway 4.

At step 46, the impersonation monitor 28 correlates the first identity and the second identity to check if there are any conflicts. For this, Data is compared, information is derived from data and followed by a comparison; and the knowledge i.e. compliance to rules is checked.

For example:
- Data: Host name in ID2 is compared with Host name in ID1;
- Information: The operating system is derived and compared with the operating system stored in ID1;
- Knowledge: if the device is an Android phone, it shall access the Android app store.

According to another example, when in the first identity, it appears that the device shall use special antennas, such as MIMO and MU-MIMO.

The corresponding facts in this case are that:
- MIMO antennas can receive and transmit on multiple spatial streams,
- MMIMO antennas have low BER (Bit Error Ratio),
- The channel width along with the MIMO antennas can constitute high throughput.

In addition to the facts collected, the gateway 4 can do some operations and wait for a response from the device. It may wait for IEEE 802.11k and 802.11v messages to see if the device has fast roaming capabilities to roam to a neighbor access point. The goal is to force the device to lock on to the alternate radio, if the device is seen to connect using the dual radio. The methods for doing this may include band steering, sending a DEAUTH message as per the IEE 802.11 standard, or putting a MAC-ACL.

If the device is able to connect to the alternate radio, then the presence of dual radio is inferred.

Similarly, by monitoring the IEEE 802.11k and 11v messages, fast roaming capabilities of the device are inferred.

Based on the correlation result consisting on a set of matches and a set of conflicts between both identities, a correlation state is achieved.

If most data match, then it is decided that there is a high correlation between the identities and the device is authorized to connect to the home network 2 at step 48.

The update, or revision, of the first identity is necessary as the user may have reset the device or may have installed new application or changed the hardware.

Hence, there is a need to update the first identity when the second identity measured at runtime has high correlation with the first idetntity along with new facts found. The revision of the first identity will be with more data, and the information and knowledge will be recalibrated.

The user can also force the gateway 4 to forget the first identity and re-learn a new first identity of the device, for instance when there has been a factory reset of the device.

According to an embodiment, when the second identity of the device is being constructed, some facts may not be available, hence the absence of data shall not lead to a conflict of information. Thus, the device will be in a low correlation mode.

In this case of low correlation, the impersonation monitor 28 continues to update the second identity till the state of the correlation becomes "no correlation" or "high correlation". The gateway 4 continues the monitoring for more data. In some cases, the gateway 4 sends some request data like roaming and gathers the response from the device. However, not all data could be requested. For example, the gateway 4 is not able to request the client operating system. In order to obtain this information, the gateway 4 monitors the packets arriving from the client to guess the operating system.

If there is a conflict between the first and second identities, for example when a previously connected device is detected as an Android phone, the same MAC address cannot declare itself as an iPhone or a laptop running Windows, it is considered that there is no correlation even if the rest of the parameters match and there is only a mismatch of the operating system.

In this case of no correlation, the gateway 4 disassociates the device, adds it to a blacklist and alerts the user regarding the impersonation attack at step 48. Later, the user can remove the device from the blacklist in order to connect to the network.

The gateway 4 may also deny access of the device to certain portion of the network.

Advantageously, the user of the device can configure the actions that shall be taken when there is impersonation.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

## Claims

1. Method for detecting a device impersonation in a network (2), the method comprising:
- building (42) a first identity (ID1) of the device at the first connection of the device to the network (2);
- each time that the device connects to the network (2) after the first connection, building (42) a second identity (ID2) of the device;
- correlating (46) the second identity (ID2) with the first identity (ID1),
- if there is no correlation between the first identity (ID1) and the second identity (ID2), de-authorizing (48) the device from the network (2),
wherein building (42) the first and second identities (ID1, ID2) comprises determining a profile of the device collected from a plurality of sources.

2. Method of claim 1, wherein the profile of the device comprises hardware and/or software characteristics related to the device.

3. Method of claim 1 or 2, comprising, when there is no correlation between the first identity (ID1) and the second identity (ID2), sending (48) an alert notification to a user of the device.

4. Method of any one of claims 1 to 3, comprising storing (44) the first identity (ID1) of the device in a non-volatile storage module (8).

5. Method of any one of claims 1 to 4, comprising updating the first identity only when there is a correlation between the first and second identities (ID1, ID2) of the device.

6. Method of any one of claims 1 to 5, wherein the first and second identities (ID1, ID2) are represented in a form of Data, Information, Knowledge and Wisdom, DIKW, pyramid.

7. Method of any one of claims 1 to 6, wherein the network is (2) a home network and the method is implemented by a gateway (4) of the home network.

8. Apparatus (4) for detecting a device impersonation in a network (2), the apparatus (4) comprising at least one processor (20) configured to:
- build a first identity (ID1) of the device at the first connection of the device to the network (2);
- each time that the device connects to the network (2) after the first connection, build a second identity (ID2) of the device;
- correlate the second identity (ID2) with the first identity (ID1),
- if there is no correlation between the first identity (ID1) and the second identity (ID2), de-authorize the device from the network (2),
wherein the first and second identities (ID1, ID2) building comprises determining a profile of the device collected from a plurality of sources.

9. Apparatus of claim 8, comprising an alert module (30) configured, when there is no correlation between the first identity (ID1) and the second identity (ID2), to send an alert notification to a user of the device.

10. Apparatus of claim 8 or 9, comprising a non-volatile storage module (8) configured to store the first identity (ID1) of the device.

11. Apparatus of any one of claim 8 to 10, wherein the apparatus (4) is a gateway.

12. A computer-readable program including computer-executable instructions to enable a computer to perform the detection method of any one of claims 1 to 7.

13. Non-transitory computer-readable storage medium implementing computer-executable instructions to enable a computer to perform the detection method of any one of claims 1 to 7.
